(19) Europäisches Patentamt

**European Patent Office**

**Office européen des brevets**

(11) Veröffentlichungsnummer: **0 316 888 B1**

(12) # EUROPÄISCHE PATENTSCHRIFT

(45) Veröffentlichungstag der Patentschrift: **04.03.92**

(51) Int. Cl.⁵: **G01C 22/02**

(21) Anmeldenummer: **88119054.0**

(22) Anmeldetag: **16.11.88**

(54) **Einrichtung zur Weg- und Geschwindigkeitsmessung bei spurgebundenen Fahrzeugen.**

(30) Priorität: **20.11.87 DE 3739271**

(43) Veröffentlichungstag der Anmeldung:
**24.05.89 Patentblatt 89/21**

(45) Bekanntmachung des Hinweises auf die
Patenterteilung:
**04.03.92 Patentblatt 92/10**

(84) Benannte Vertragsstaaten:
**AT DE ES IT**

(56) Entgegenhaltungen:
**DE-A- 2 401 363**
**DE-A- 2 741 883**
**DE-A- 2 751 012**
**DE-B- 2 813 078**

(73) Patentinhaber: **Standard Elektrik Lorenz Aktiengesellschaft**
**Lorenzstrasse 10**
**W-7000 Stuttgart 40(DE)**

(72) Erfinder: **Uebel, Helmut**
**Forchenrainstrasse 38**
**W-7016 Gerlingen(DE)**

(74) Vertreter: **Pechhold, Eberhard, Dipl.-Phys. et al**
**Standard Elektrik Lorenz AG Patent- und Lizenzwesen Postfach 30 09 29**
**W-7000 Stuttgart 30(DE)**

## Beschreibung

Die Erfindung betrifft eine Einrichtung zur Weg- und Geschwindigkeitsmessung gemäß dem Oberbegriff des Patentanspruchs 1.

Eine solche Einrichtung ist aus der DE-C-28 13 078 bekannt. Sie arbeitet zufriedenstellend, solange Schlupf nur vorübergehend, beim Beschleunigen oder beim Bremsen auftritt, wie dies bei den heute im Gebrauch befindlichen Schienenfahrzeugen der Fall ist.

Für die Zukunft sind jedoch Fahrzeuge in der Diskussion, bei denen der Schlupf gesteuert wird und bei denen es durchaus vorkommen kann, daß über eine längere Zeit hinweg ein konstanter Mikroschlupf auftritt, den die Schlupfüberwachung nicht erkennt und der dennoch die Weg- und Geschwindigkeitsmessung verfälscht

Es ist dehalb Aufgabe der Erfindung, die bekannte Weg-und Geschwindigkeitsmeßeinrichtung dahingehend zu verbessern, daß auch konstanter Mikroschlupf nicht zu Fehlmessungen des Weges oder der Geschwindigkeit führt.

Diese Aufgabe wird durch die Merkmale des kennzeichnenden Teils des Patentanspruchs 1 gelöst.

Durch die zusätzliche Verwendung eines für sich bekannten, radunabhängig arbeitenden Wegmeßgerätes, z.B. eines Dopplerradargerätes oder eines mit Hilfe eines optischen Korrelationsverfahrens arbeitenden Gerätes, ist einerseits auch während Phasen, in denen Mikroschlupf auftritt, eine genaue Wegmessung möglich, andererseits werden Nachteile und Unzulänglichkeiten des radunabhängig arbeitenden Wegmeßgerätes durch den Beschleunigungsmesser und das radabhängige Wegmeßsystem ausgeglichen. Als solche Nachteile sind bei den bekannten Dopplerradar-Systemen die Unsicherheit bei der Fahrtrichtungserkennung, der Ausfall der Messung bei bestimmten Untergründen (z.B. Riffelblechen) und die Empfindlichkeit gegenüber Fremdeinflüssen (z.B. Vortäuschung einer Bewegung bei Schneetreiben) zu nennen. Bei optischen Wegmeßsystemen besteht neben dem zuletzt genannten Nachteil vor allem die Gefahr des Ausfalls infolge Verschmutzung oder Vereisung der Optik.

Ausgestaltungen der Einrichtung nach der Erfindung sind in den abhängigen Ansprüchen beschrieben: So enthält eine im Anspruch 2 beschriebene Ausgestaltung einfache diskret aufgebaute logische Schaltungsanordnungen für die Korrektur der Inertialbeschleunigung in den beiden Auswertekanälen.

Anspruch 3 gibt eine Möglichkeit an, den Wert der Hangbeschleunigung vor Verfälschungen durch Schlupf zu schützen.

Anspruch 4 betrifft eine Möglichkeit zur automatischen Eichung des radabhängigen Wegmeßsystems mit Hilfe des radunabhängigen Wegmeßsystems. Regelmäßige Kontrollen des Raddurchmessers und entsprechendes Nachstellen des Radimpulsgebers können damit entfallen.

Der Gegenstand des Anspruchs 5 ermöglicht eine sichere Fahrtrichtungsvorgabe für den zweiten Auswertekanal.

Anspruch 6, schließlich, sieht den Ersatz der diskreten Schaltungsteile durch einen Rechner vor, der die einzelnen Schaltungsfunktionen nach einem entsprechend der Funktion der Einrichtung gestalteten Programm ausführt.

Anhand einer Figur soll nun ein Ausführungsbeispiel der erfindungsgemäßen Einrichtung ausführlich beschrieben und die Funktion der Einrichtung erklärt werden.

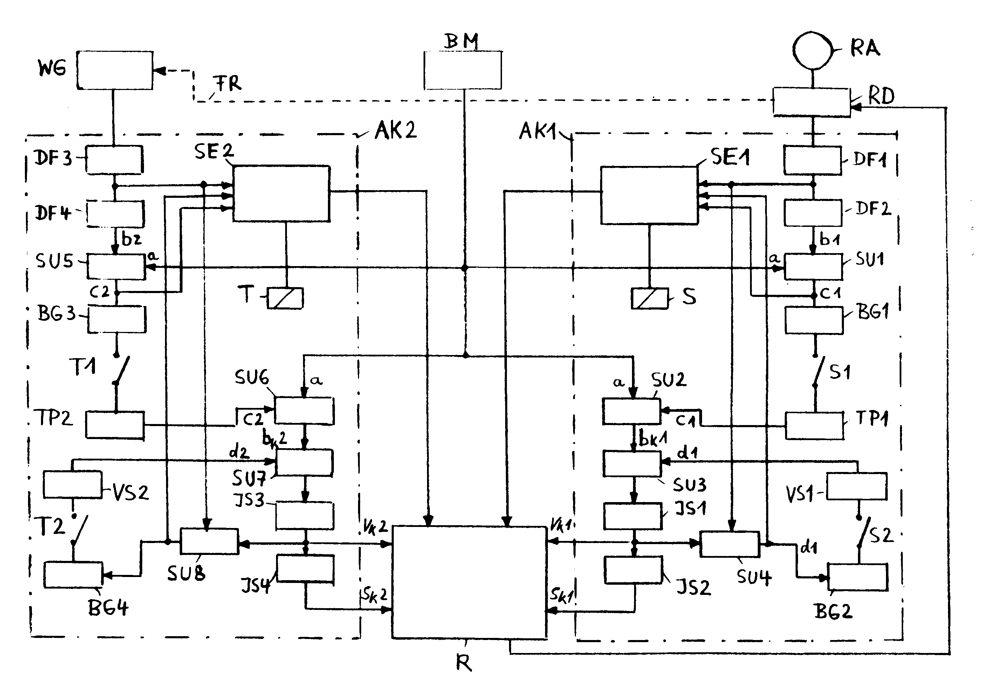

In der Figur sind ein radabhängig arbeitender Wegimpulsgeber RA, ein Inertial-Beschleunigungsmesser BM und ein radunabhängig arbeitendes Wegmeßgerät WG dargestellt, die sich auf demselben Fahrzeug befinden.

Die Ausgangssignale des radabhängig arbeitenden Wegimpulsgebers RA und des radunabhängig arbeitenden Wegmeßgerätes WG werden je einem Auswertekanal AK1, AK2 zugeführt, wobei die des radabhängig arbeitenden Gebers zuvor über eine Raddurchmesser-Korrekturschaltung RD geleitet werden, welche die aus der Radumdrehung gewonnene Folge der Wegimpulse so verändert, daß Meßfehler durch abnutzungsbedingte Änderungen des Raddurchmessers kompensiert werden. Die beiden Auswertekanäle entsprechen einander in ihrem Aufbau. In beiden Kanälen wird aus einem vom Inertial-Beschleunigungsgeber BM gemessenen Beschleunigungswert a durch zweimalige Integration in hintereinandergeschalteten Integrierschaltungen JS1, JS2; JS3, JS4 ein Wert $V_K1$, $V_K2$ für die Geschwindigkeit und ein Wert $S_K1$, $S_K2$ für den vom Fahrzeug zurückgelegten Weg gewonnen. Vor Eingabe in die Integrierschaltungen wird der Beschleunigungswert a in je zwei Subtrahierschaltungen SU2, SU3,. SU6, SU7 Korrekturen unterworfen. Dabei wird er zunächst von einer Verfälschung durch die Streckenneigung, der sogenannten Hangbeschleunigung C1, C2 befreit, anschließend wird er einer Driftkorrektur unterzogen.

Die Hangbeschleunigung C1 wird als Differenz zwischen der vom Inertial-Beschleunigungsmesser gemessenen Beschleunigung a und der aus der Impulsfolge des radabhängigen Wegimpulsgebers berechneten Beschleunigung b1 in einer Subtrahierschaltung SU1 gewonnen. Die vom Beschleunigungsmesser gemessene Beschleunigung a wird der Subtrahierschaltung hierzu direkt zugeführt, das Ausgangsignal des radabhängigen Wegimpulsgebers RA wird nach Korrektur in der Raddurchmesser-Korrekturschaltung RD zuvor zwei in Reihe geschalteten Differenzierschaltungen DF1, DF2 zugeführt, von denen es die erste in ein Geschwindigkeitssignal umsetzt, aus dem die zweite das Beschleunigungssignal gewinnt. Der am Ausgang der Subtrahierschaltung SU1 anstehende Wert der Hangbeschleunigung C1 wird über eine Begrenzerschaltung BG1, einen Schalter S1 und einen Tiefpaß TP1 der Subtrahierschaltung SU2 zugeführt und dort von dem durch den Inertial-Beschleunigungsmesser gelieferten Beschleunigungswert a subtrahiert.

Die nach der Subtraktion verbleibende einfach korrigierte Beschleunigung $b_K1$ wird danach in der Subtrahierschaltung SU3 der Driftkorrektur unterzogen und schließlich der Integrierschaltung JS1 zugeführt. Die Driftkorrektur erfolgt durch Subtraktion eines Wertes d1, der in einer weiteren Subtrahierschaltung SU4 gewonnen wird und dem Unterschied zwischen korrigierter Geschwindigkeit $V_K1$ und durch den Radimpulsgeber gewonnener Geschwindigkeit proportional ist, von der einfach korrigierten Beschleunigung $b_K1$. Der Wert d1 wird von der Stubtrahierschaltung SU4 über eine weitere Begrenzerschaltung BG2, einen weiteren Schalter S2 und einen Verstärker VS1 der Subtrahierschaltung SU3 zugeführt. Mit Hilfe des Schalters S2, der, wie der Schalter S1, von einer Schlupferkennnungsschaltung SE1 gesteuert wird, kann bei erkanntem Schlupf die Driftkorrektur abgeschaltet werden. Der Schalter S1 trennt gleichzeitig das die Hangbeschleunigung wiedergebende Signal C1 vom Eingang des Tiefpasses TP1 ab. Am Ausgang des Tiefpasses erscheint dann für eine gewisse Zeit weiterhin das zuletzt abgegebene Signal. Wird die Grenzfrequenz des Tiefpasses sehr niedrig gewählt, so wirkt der Tiefpaß wie ein Speicher, aus dem in Phasen auftretenden Schlupfes, während derer aus der Zahl der Radumdrehungen kein brauchbarer Wert für die Hangbeschleunigung gewonnen werden kann, ersatzweise der vor dem Auftreten des Schlupfes ermittelte Wert für die Hangbeschleunigung entnommen und der Subtrahierschaltung SU2 zugeführt werden kann.

Die Schlupferkennungsschaltung SE1 besteht im wesentlichen aus Vergleichern und einem Oder-Gatter. Ein erstes Vergleicherpaar vergleicht den Wert der Hangbeschleunigung C1 mit fest vorgegebenen, die maximale positive und die maximale negative Streckenneigung wiedergebenden Werten. Wird eine dieser Werte überschritten, so wird Schlupf angezeigt. Ein anderer Vergleicher bewertet den Unterschied zwischen korrigierter Fahrzeuggeschwindigkeit und durch den Radimpulsgeber festgestellter Geschwindigkeit (Wert d1) und meldet Schlupf, wenn dieser einen vorgegebenen Toleranzwert überschreitet. Jede Schlupfmeldung, ganz gleich, ob sie durch einen oder durch mehrere Vergleicher gleichzeitig erfolgt, führt zur Öffnung der Schalter S1 und S2, die z.B., wie in der Figur dargestellt, Kontakte eines Relais S sein können.

Der zweite Auswertekanal arbeitet völlig analog dem beschriebenen ersten Auswertekanal. Die Schaltung DF3 und DF4 entsprechen demnach den Schaltungen DF1 und DF2 im ersten Auswertekanal AK1. Ebenso entsprechen die Subtrahierschaltungen SU5 bis SU8 den Subtrahierschaltungen SU1 bis SU4, die Integrierschaltungen JS3 und JS4 den Integrierschaltungen JS1 und JS2, die Begrenzerschaltungen BG3 und BG4 den Begrenzerschaltungen BG1 und BG2. Schließlich entspricht auch die Verstärkerschaltung VS2 der Verstärkerschaltung VS1 und die Schalter T1 und T2 (z.B. Kontakte eines Relais T) haben dieselbe Funktion wie die Schalter S1 und S2 im Auswertekanal AK1. Es entfällt jedoch, da keine radabhängigen Signale verarbeitet werden, die Raddurchmesser-Korrekturschaltung und anstelle der Schlupferkennungsschaltung SE1 ist ein Fehlmessungsdetektor SE2 vorgesehen, der wie die Schlupferkennungsschaltung, den Schaltern S1 und S2 im ersten Auswertekanal entsprechende Schalter T1 und T2 öffnet, wenn die im 2. Auswertekanal ermittelte Hangbeschleunigung C2 einen Wert annimmt, der die maximale Streckenneigung übersteigt, oder wenn sich die korrigierte Geschwindigkeit von der mit Hilfe des radunabängig arbeitenden Wegmessgerätes festgestellten Geschwindigkeit um mehr als einen zulässigen Toleranzwert unterscheidet.

Würde z.B. bei ungünstigem Untergrund ein als radunabhängig arbeitendes Wegmessgerät eingesetztes Dopplerradar plötzlich versagen, so würde aufgrund der Geschwindigkeitsabweichungen durch den Fehlmessungsdetektor SE2 eine Fehlmessung registriert und eine Korrektur des vom Inertial-Beschleunigungsmesser BM gelieferten Beschleunigungswertes a würde unterbleiben. Auch eine vom Radar z.B. infolge Schneetreibens falsch gemessene Geschwindigkeit würde durch den Geschwindigkeitsvergleich des Fehlmessungsdetektors erkannt. Konstanter Mikroschlupf könnte nur durch einen Vergleich der in beiden Auswertekanälen gewonnenen korrigierten Werte miteinander sicher festgestellt werden, denn die Schlupferkennnungsschaltung SE1 kann nicht so kritisch eingestellt werden, daß ihr Toleranzwert kleiner ist als der durch den Mikroschlupf produzierte Unterschied zwischen den zu vergleichenden Geschwindigkeitswerten.

Ein Vergleich der in beiden Auswertekanälen AK1, AK2 ermittelten korrigierten Werte $S_K1$, $S_K2$, $V_K1$, $V_K2$ für Weg und Geschwindigkeit wird zweckmäßig von einem Rechner R durchgeführt, der sowohl der für Aufgaben der Fahrzeugsteuerung im Rahmen der Linienzugbeeinflussung vorgesehene Rechner sein kann als auch ein vorgeschalteter gesonderter Rechner.

Der Rechner R ist außer mit den Ausgängen der Auswertekanäle auch mit den Ausgängen der Schlupferkennungsschaltung SE1 und des Fehlmessungsdetektors SE2 verbunden. Er kennt demnach den momentanen Fahrzustand des Fahrzeuges und kann je nach diesem Fahrzustand die Meßwerte des einen oder des anderen Kanals zur Weiterverarbeitung auswählen. Der Rechner ist außerdem mit der Raddurchmesserkorrekturschaltung RD verbunden und gibt dieser vor, um welchen Wert die Impulsfolge des Radimpulsgebers verändert werden muß, um durch Änderung des Raddurchmessers bedingte Meßfehler auszugleichen. Der Rechner kann, z.B. während Bewegungsphasen in denen kein Schlupf und keine Fehlmessungen des randunabhängigen Wegmeßsystems zu erwarten sind, die Raddurchmesser-Korrekturschaltung so verstellen, daß der mit Hilfe des radabhängigen Wegmeßsystems gemessene Weg genau dem durch die hochgenaue radunabhängig arbeitende Wegmeßeinrichtung gemessenen Wert entspricht und auf diese Weise das radabhängige Wegmeßsystem eichen. Es wird damit eine sonst in regelmäßigen Zeitabständen vorzunehmende Messung des Raddurchmessers überflüssig.

Da der radabhängig arbeitende Wegimpulsgeber im Gegensatz zum radunabhängigen Wegmeßsystem die Fahrtrichtung sicher erkennt kann eine Information darüber der radunabhängig arbeitenden Wegmeßeinrichtung über eine Verbindung FR übermittelt werden.

**Patentansprüche**

1. Einrichtung zur Weg- und Geschwindigkeitsmessung bei spurgebundenen Fahrzeugen mit mindestens einem Radimpulsgeber (RA), mindestens einem Inertial-Beschleunigungsmesser (BM), einer die Anzahl der Radimpulse und einer die Radimpuls-Folgefrequenz auswertenden Schaltung, einer Schlupferkennungsschaltung (SE1) und einem ersten Auswertekanal (AK1), der zwei Integrierglieder (JS1, JS2), welche die Fahrzeuggeschwindigkeit und den zurückgelegten Weg aus dem Ausgangssignal des Inertial-Beschleunigungsmessers ermitteln, sowie Korrekturglieder (SU2, SU3) enthält, die eine ständige Korrektur des Wertes der Inertialbeschleunigung mit Hilfe der die Radimpuls-Folgefrequenz auswertenden Schaltung (DF2) zulassen, solange kein Schlupf von mit Radimpulsgebern gekoppelten Rädern durch die Schlupferkennungsschaltung festgestellt wird, **dadurch gekennzeichnet,** daß ein zweiter, gleichartiger Auswertekanal (AK2) vorgesehen ist, dem das Ausgangssignal des Inertial-Beschleunigungsmessers (BM) ebenfalls zugeführt wird, daß zusätzlich ein radunabhängig arbeitendes Wegmeßgerät (WG), diesem nachgeschaltet, das Ausgangssignal des Wegmeßgerätes und ein daraus abgeleitetes Geschwindigkeitssignal auswertende Schaltungen (DF3, DF4) sowie ein Fehlmessungsdetektor (SE2) vorgesehen sind, daß eine ständige Korrektur des Wertes (a) der Inertialbeschleunigung im zweiten Auswertekanal mit Hilfe der das aus dem Wegmeßsignal des radunabhängig arbeitenden Wegmeßgerätes (WG) abgeleitete Geschwindigkeitssignal auswertenden Schaltung (DF4) erfolgt, wenn keine Fehlmessung des radunabhängig arbeitenden Wegmeßgerätes (WG) durch den Fehlmessungsdetektor (SE2) festgestellt wird, und daß ein nachgeordneter Rechner (R) vorgesehen ist, der die in beiden Auswertekanälen (AK1, AK2) gewonnenen Weg- und Geschwindigkeitsmeßwerte ($S_K1$, $S_K2$, $V_K1$, $V_K2$) zugeführt bekommt und abhängig von der gefahrenen Geschwindigkeit und Signalen der Schlupferkennungsschaltung (SE1) und des Fehlmessungsdetektors (SE2) die Werte des einen oder anderen Auswertekanals zur Weiterverarbeitung freigibt.

2. Einrichtung nach Anspruch 1, dadurch gekennzeichnet, daß zur Korrektur der Inertialbeschleunigung (a) durch die die Radimpuls-Folgefrequenz auswertende Schaltung (DF2) im ersten Auswertekanal (AK1) eine erste Subtrahierschaltung (SU1) zur Ermittlung der Hangbeschleunigung (C1) als Differenz von Inertialbeschleunigung (a) und aus der Radimpuls-Folgefrequenz gewonnener Fahrzeugbeschleunigung (b1) und eine zweite Subtrahierschaltung (SU2) zur Subtraktion der Hangbeschleunigung (C1) von der Inertialbeschleunigung (a) vorgesehen sind und daß zur Korrektur der Inertialbeschleunigung durch die das Geschwindigkeitssignal des radunabhängig arbeitenden Wegmeßgerätes auswertende Schaltung (DF4) im zweiten Auswertekanal (AK2) eine der ersten Subtrahierschaltung entsprechende Subtrahierschaltung (SU5) zur Ermittlung der Hangbeschleunigung (C2) als Differenz von Inertialbeschleunigung (a) und einem aus dem Geschwindigkeitssignal des radunabhängig arbeitenden Wegmeßgerätes (WG) gewonnenen Beschleunigungswert (b2) und eine der zweiten Subtrahierschaltung entsprechende Subtrahierschaltung (SU6) zur Subtraktion der Hangbeschleunigung (C2) von der Inertialbeschleunigung (a) vorgesehen sind.

3. Einrichtung nach Anspruch 1, dadurch gekennzeichnet, daß in beiden Auswertekanälen Zwischenspeicher (TP1, TP2) zur zeitlich begrenzten Speicherung des im jeweiligen Kanal ermittelten Wertes (C1, C2) der Hangbeschleunigung vorgesehen sind und diesen einseitig vorgeschaltete Schalter (S1, T1), die von der Schlupferkennungsschaltung (SE1) oder dem Fehlmessungsdetektor (SE2) beaufschlagt werden und den Eingang des jeweiligen Zwischenspeichers speisen, wenn Schlupf erkannt wird

4.  Einrichtung nach einem der vorstehenden Ansprüche, dadurch gekennzeichnet, daß im Ausgang des Radimpulsgebers (RA) eine Raddurchmesser-Korrekturschaltung (RD) zur Kompensation des Einflusses von Änderungen des Raddurchmessers angeordnet ist und daß diese bei bestimmten Betriebsbedingungen des Fahrzeugs vom nachgeordneten Rechner (R), abhängig von den im zweiten Auswertekanal ermittelten Weg- und Geschwindigkeitswerten, nachgestellt und damit der Radimpulsgeber (RA) geeicht wird.

5.  Einrichtung nach einem der vorstehenden Ansprüche, dadurch gekennzeichnet, daß eine Verbindung (FR) zwischen Radimpulsgeber (RA) und radunabhängiger Wegmeßeinrichtung (WG) besteht, über die ein vom Radimpulsgeber ermitteltes Fahrtrichtungskennzeichen der radunabhängigen Wegmeßeinrichtung mitgeteilt wird.

6.  Einrichtung nach einem der Ansprüche 1 bis 4, dadurch gekennzeichnet, daß Funktionen von zumindest einem Teil der in den Auswertekanälen (AK1, AK2) enthaltenen Schaltungen durch Schritte eines Rechnerprogrammes ausgeführt werden und daß die Ausgangssignale des Radimpulsgebers, des Inertial-Beschleunigungsmessers und des radunabhängigen Wegmeßgerätes hierzu dem nachgeordneten Rechner (R) zugeführt werden.

**Claims**

1.  Apparatus for measuring the distance travelled by and the speed of travel of track-bound vehicles, comprising at least one wheel-pulse generator (RA), at least one inertial-acceleration meter (BM), a circuit evaluating the number of wheel pulses, a circuit evaluating the wheel pulse repetition frequency, a slip detection circuit (SE1), and a first evaluation channel (AK1) including two integrators (JS1, JS2) and correcting units (SU2, SU3), said integrators (JS1, JS2) determining the speed of travel and the distance travelled from the output signal of the inertial-acceleration meter, and said correcting units (SU2, SU3) permitting constant correction of the inertial-acceleration value with the aid of the circuit (DF2) evaluating the wheel pulse repetition frequency as long as no slip of wheels coupled to wheel-pulse generators is detected by the slip detection circuit, **characterized in** that a second, like evaluation channel (AK2) is provided which is also supplied with the output signal of the inertial-acceleration meter (BM), that a wheel-independent odometer (WG), circuits (DF3, DF4) following said odometer and evaluating the output signal of said odometer and a speed signal derived therefrom, and a measurement error detector (SE2) are provided, that in the second evaluation channel, the value (a) of the inertial acceleration is constantly corrected with the aid of the circuit (DF4) evaluating the speed signal derived from the output signal of the wheel-independent odometer (WG) when no measurement error of the wheel-independent odometer (WG) is detected by the measurement error detector (SE2), and that a subsequent computer (R) is provided which is fed with the distance and speed values ($S_K$1, $S_K$2, $V_K$1, $V_K$2) derived in the two evaluation channels (AK1, AK2) and releases the values of one of said evaluation channels or the other for further processing depending on the speed of travel and on signals from the slip detection circuit (SE1) and the measurement error detector (SE2).

2.  An apparatus as claimed in claim 1, characterized in that to correct the inertial acceleration (a) by means of the circuit (DF2) evaluating the wheel repetition frequency, the first evaluation channel (AK1) includes a first subtracter (SU1) for determining the gradient acceleration (C1) as the difference between inertial acceleration (a) and vehicle acceleration (b1) derived from the wheel pulse repetition frequency, and a second subtracter (SU2) for subtracting the gradient acceleration (C1) from the inertial acceleration (a), and that to correct the inertial acceleration by means of the circuit (DF4) evaluating the speed signal of the wheel-independent odometer, the second evaluation channel (AK2) includes a subtracter (SU5) corresponding to the first subtracter and determining the gradient acceleration (C2) as the difference between inertial acceleration (a) and an acceleration value (b2) derived from the speed signal of the wheel-independent odometer (WG), and a subtracter (SU6) corresponding to the second subtracter and subtracting the gradient acceleration (C2) from the inertial acceleration (a).

3. An apparatus as claimed in claim 1, characterized in that each of the two evaluation channels includes a buffer (TP1, TP2) for temporarily storing the value (C1, C2) of the gradient acceleration determined in the respective channel, and a switch (S1, T1) preceding said buffer (TP1, TP2), said switch receiving signals from the slip detection circuit (SE1) or the measurement error detector (SE2), respectively, and feeding the input of the associated buffer if slip is detected.

4. An apparatus as claimed in any one of the preceding claims, characterized in that the output stage of the wheel-pulse generator (RA) contains a wheel diameter correction circuit (RD) for compensating the effect of changes in wheel diameter, and that under certain operating conditions of the vehicle, said wheel diameter correction circuit is readjusted by the subsequent computer (R) in accordance with the distance and speed values determined in the second evaluation channel to calibrate the wheel-pulse generator (RA).

5. An apparatus as claimed in any one of the preceding claims, characterized in that a connection (FR) exists between the wheel-pulse generator (RA) and the wheel-independent odometer (WG) over which a direction-of-travel signal determined by the wheel-pulse generator is sent to the wheel-independent odometer.

6. An apparatus as claimed in any one of claims 1 to 4, characterized in that functions of at least part of the circuits contained in the evaluation channels (AK1, AK2) are performed by steps of a computer program, and that to this end, the output signals of the wheel-pulse generator, the inertial-acceleration meter, and the wheel-independent odometer are fed to the subsequent computer (R).

**Revendications**

1. Dispositif de mesure du déplacement et de la vitesse pour des véhicules guidés sur une voie, comprenant au moins un émetteur d'impulsions de roue (RA), au moins un dispositif de mesure de l'accélération inertielle (BM), un circuit évaluant le nombre des impulsions de roue, et un circuit évaluant la fréquence de répétition des impulsions de roue, un circuit de reconnaissance du glissement (SE1) et un premier canal d'exploitation (AK1) qui comprend deux éléments intégrateurs (JS1, JS2) fournissant la vitesse du véhicule et le déplacement parcouru à partir du signal de sortie du dispositif de mesure de l'accélération inertielle, ainsi que des éléments de correction (SU2, SU3), qui corrigent constamment la valeur de l'accélération inertielle à l'aide d'un circuit (DF2) d'évaluation de la fréquence de répétition des impulsions de roue, aussi longtemps qu'aucun glissement des roues couplées à un émetteur d'impulsions n'est mis en évidence par le circuit de reconnaissance du glissement, caractérisé en ce qu'il comporte un deuxième canal d'exploitation (AK2) semblable, auquel est aussi transmis le signal de sortie du dispositif de mesure de l'accélération inertielle (BM) en ce qu'il comporte en outre un dispositif de mesure du déplacement (WG) fonctionnant indépendamment des roues suivi par des circuits (DF3, DF4) d'analyse du signal de sortie de l'appareil de mesure du déplacement et d'un signal de vitesse qui en dérive, ainsi qu'un détecteur d'erreur de mesure (SE2), en ce qu'une correction de la valeur (a) de l'accélération inertielle dans le deuxième canal d'exploitation à l'aide du circuit (DF4) d'analyse du signal de vitesse obtenu à partir du signal de mesure du déplacement du dispositif de mesure du déplacement (WG) indépendant des roues est constamment mise en oeuvre lorsque le détecteur d'erreur de mesure (SE2) ne met pas en évidence d'erreur de mesure dans le dispositif de mesure du déplacement (WG) indépendant des roues, et en ce qu'il comprend ensuite un calculateur (R), auquel sont transmises les valeurs du déplacement et de la vitesse ($S_K1$, $S_K2$, $V_K1$, $V_K2$. obtenues dans les deux canaux d'exploitation (AK1, AK2), et qui fournit pour un traitement ultérieur la valeur de l'un ou l'autre des canaux d'exploitation, en fonction de la vitesse de roulement et des signaux du circuit de reconnaissance du glissement (SE1) et du détecteur d'erreur de mesure (SE2).

2. Dispositif selon la revendication 1, caractérisé en ce qu'il comporte, dans le premier canal d'exploitation (AK1) pour la correction de l'accélération inertielle (a) par le circuit (DF2) d'analyse de la fréquence de répétition des impulsions de roue:
   - un premier circuit soustracteur (SU1) calculant l'accélération due à la pente (C1), comme différence entre l'accélération inertielle (a) et l'accélération du véhicule (b1) obtenue grâce à la fréquence de répétition des impulsions de roue; et
   - un deuxième circuit soustracteur (SU2) pour soustraire l'accélération due à la pente (C1) de l'accélération inertielle (a) et en ce qu'il comprend dans le deuxième canal d'exploitation (AK2), pour la correction de l'accélération inertielle par le circuit (DF4) d'analyse du signal de vitesse de l'appareil de mesure du déplacement indépendant des roues:

- un circuit soustracteur (SU5) correspondant du premier circuit soustracteur, calculant l'accélération due à la pente (C2), comme différence entre l'accélération inertielle (a) et une valeur de l'accélération obtenue grâce au signal de vitesse du dispositif de mesure du déplacement (WG) fonctionnant indépendamment des roues; et

- un circuit soustracteur (SU6) correspondant au deuxième circuit soustracteur, pour soustraire l'accélération due à la pente (C2) de l'accélération inertielle (a).

3. Dispositif selon la revendication 1, caractérisé en ce qu'il comprend dans les deux canaux d'exploitation des mémoires intermédiaires (TP1, TP2), pour un stockage limité dans le temps des valeurs de l'accélération due à la pente (C1, C2) émises dans chaque canal, et des interrupteurs (S1, T1) précédant l'un des côtés de ces mémoires intermédiaires et qui peuvent être actionnés par le circuit de reconnaissance du glissement (SE1) ou de détecteur d'erreur de mesure (SE2), et qui alimentent l'entrée de la mémoire intermédiaire correspondante lorsque l'on met en évidence un glissement.

4. Dispositif selon l'une des revendications précédentes, caractérisé en ce qu'il comprend en sortie de l'émetteur d'impulsion de roues (RA) un circuit de correction du diamètre de la roue (RD), afin de compenser l'influence de changements du diamètre des roues, et en ce que ce circuit est réglé par le calculateur (R), lors de conditions de fonctionnement particulières du véhicule, en fonction des valeurs de la vitesse et du déplacement fournies par le deuxième canal d'exploitation, de façon à étalonner l'émetteur d'impulsion de roue (RA).

5. Dispositif selon l'une des revendications précédentes, caractérisé en ce qu'il comprend une liaison (FR) entre l'émetteur d'impulsions de roues (RA) et l'appareil de mesure du déplacement (WG) indépendant des roues, sur laquelle une information de direction de déplacement fournie par l'émetteur d'impulsions de roue est transmise à l'appareil de mesure du déplacement indépendant des roues.

6. Dispositif selon l'une des revendications 1 à 4, caractérisé en ce que les fonctions d'au moins une partie des circuits des canaux d'exploitation (AK1, AK2) sont assurées par des étapes d'un programme de calculateur, et en ce que les signaux de sortie de l'émetteur d'impulsion de roue, du dispositif de mesure de l'accélération inertielle et du dispositif de mesure du déplacement indépendant des roues sont transmis au calculateur (R).